# EUROPEAN PATENT SPECIFICATION

(11) **EP 3 943 332 B1**
(45) Date of publication and mention of the grant of the patent: **04.09.2024**
(21) Application number: 20929504.7
(22) Date of filing: 10.12.2020
(51) Int. Cl.: B60K 35/10, B60K 35/21, B60K 35/22, B60K 35/28, B60W 50/14

(54) **INFORMATION DISPLAY CONTROL METHOD AND APPARATUS, AND VEHICLE**
VERFAHREN UND VORRICHTUNG ZUR STEUERUNG DER INFORMATIONSANZEIGE UND FAHRZEUG
PROCÉDÉ ET APPAREIL DE COMMANDE D'AFFICHAGE D'INFORMATIONS ET VÉHICULE

(30) Priority: 30.03.2020 CN 202010238773
(43) Date of publication of application: 26.01.2022
(73) Proprietor: Guangzhou Chengxing Zhidong Motors Technology Co., Ltd., Guangzhou, Guangdong 510000 (CN); Guangzhou Xiaopeng Motors Technology Co., Ltd., Guangzhou, Guangdong 510630 (CN)
(72) Inventor: DENG, Shuai, Guangzhou, Guangdong 510700 (CN); JIAN, Jia, Guangzhou, Guangdong 510700 (CN); LUO, Shuangfeng, Guangzhou, Guangdong 510700 (CN)
(74) Representative: Ran, Handong
(86) International application number: PCT/CN2020/135104
(87) International publication number: WO 2021/196716

(56) References cited:
- CN-A- 103 869 946
- CN-A- 103 885 592
- CN-A- 108 984 058
- CN-A- 109 271 027
- CN-A- 110 162 170
- CN-A- 111 452 616
- GB-A- 2 567 164
- KR-A- 20180 053 290
- KR-A- 20190 004 606
- US-A1- 2017 212 583

## Description

### CROSS REFERENCE TO RELATED APPLICATIONS

The present application claims priority from Chinese Patent Application No. CN202010238773.9 filed with China National Intellectual Property Administration on 30 March 2020.

### TECHNICAL FIELD

The present invention relates to the technical field of automobiles, and in particular to an information display control method, apparatus and vehicles.

### BACKGROUND

With increasing popularity of automobiles in people's daily life and digitization of information, more and more information is integrated into display panels of automobiles for users to view and use.

With most in-vehicle systems on the market, various categories of information on display panels are fixedly displayed in predefined regions. Users must adapt to information structures of the systems in order to have improved user experience when viewing information on such display panels.
KR 2019 0004606 A discloses a vehicle control device mounted on a vehicle and a method for controlling the vehicle. The vehicle control device comprises a sensing unit sensing eyes of a driver; a display unit; and a processor for controlling the display unit to change the display mode of information displayed in an area outside the area toward which the driver's line of sight is directed to.
KR 2018 0053290 A discloses a control apparatus for a vehicle, which can control a plurality of displays provided in the vehicle. The control apparatus comprises: an instrument board display formed to display speed information of the vehicle; a sensor for tracing the sight of a driver on a driver seat of the vehicle; and a controller. When the sight is toward any one of the displays, the controller controls the instrument board display to output contents in the process of being printed from the display.
GB 2 567 164 A discloses a display system in a vehicle, which comprises: one or more displays; at least one sensor configured to determine a user's line of sight; a controller configured to determine an active zone and a non-active zone of the one or more displays based on the user's line of sight. The one or more displays are configured to operate the active zone at an enhanced level as compared to the non-active zone. There is further provided a controller configured to rank content displayed on one or more displays according to an attention score determined by at least one sensor configured to measure gaze of a user based on the user's line of sight; and a display system comprising the controller, wherein one of the displays is selected to display the highest ranked content.

### SUMMARY

Embodiments of the present invention provide a control method for information display to improve user experience of viewing information on a display panel.

Embodiments of the present invention further provide a control apparatus for information display and a vehicle to ensure implementation and application of the method.

In order to solve the above-mentioned technical problem, the present invention discloses a control method for information display, including adjusting an information structure of display information on a display unit in response to a change of a user's line of sight on the display unit while driving a vehicle. The information is displayed in an area on the display unit via a multi-level interface, the multi-level interface comprises an upper-level interface for displaying a first portion of the information by default and a lower-level interface for displaying a second portion of the information. Adjusting the information structure of display information on the display unit in response to a shift of a user's line of sight on the display unit comprises opening the lower-level interface of the multi-level interface and displaying the second portion of the information when a retention time of the user's line of sight in the area exceeds a preset length of time.

The display unit includes an instrument panel, and an information structure of the instrument panel includes a left region, a middle region and a right region; and the adjusting an information structure of display information on a display unit in response to a change of a user's line of sight on the display unit includes: when the user's line of sight moves to the middle region of the instrument panel, enlarging the middle region and display information in the middle region, shrinking the left region and display information in the left region, and shrinking the right region and display information in the right region.

The display unit includes an instrument panel, and an information structure of the instrument panel includes a left region, a middle region and a right region; and the adjusting an information structure of display information on a display unit in response to a change of a user's line of sight on the display unit includes: when the display information in the right region is hidden, displaying corresponding display information in the right region when the user's line of sight moves to the right region of the instrument panel.

The adjusting an information structure of display information on a display unit in response to a change of a user's line of sight on the display unit further includes displaying source information of a notification message in the right region when the user's line of sight moves to the right region of the instrument panel if the notification message is displayed in the right region.

The adjusting an information structure of display information on a display unit in response to a change of a user's line of sight on the display unit further includes displaying content of the notification message when a retention time of the user's line of sight in a display position corresponding to the source information exceeds a preset length of time.

The adjusting an information structure of display information on a display unit in response to a change of a user's line of sight on the display unit further includes opening a lower-level interface of a current interface in the left region and displaying corresponding information when a retention time of the user's line of sight in the left region exceeds a preset length of time.

The display unit includes a central control panel, and an information structure of the central control panel includes a right region for displaying navigation information and a left region for displaying other categories of information; and the adjusting an information structure of display information on a display unit in response to a change of a user's line of sight on the display unit includes: displaying the corresponding other categories of information in the left region when the user's line of sight moves to the left region of the central control panel after switching the navigation information from display in the right region to display in the full panel and hiding other categories of information, where an interface on which the other categories of information are located is above an interface on which the navigation information is located.

The adjusting an information structure of display information on a display unit in response to a shift of a user's line of sight on the display unit further includes: hiding the other categories of information again when the user's line of sight moves to the right region of the central control panel or that the user's line of sight has left the left region of the central control panel for a preset length of time after the corresponding other categories of information are displayed in the left region.

A plurality of display units are provided, and the adjusting an information structure of display information on a display unit in response to a shift of a user's line of sight on the display unit includes: switching a notification message from a first display unit to a second display unit for display if the notification message is displayed in the first display unit and the user's line of sight is detected to shift to the second display unit in the process of receiving the notification message or within a preset length of time after the notification message is received.

The method further includes: when the user's line of sight moves to the display unit, determining target brightness based on the user's line of sight, interior brightness of the vehicle and current time; and adjusting brightness of the display unit on which the user's line of sight falls from default brightness to the target brightness.

The method further includes: detecting a relative position of the user's head to the display unit; and adjusting the display information on the display unit to be displayed to the user based on the relative position.

The display unit includes an instrument panel, and an information structure of the instrument panel includes a left region, a middle region and a right region; and the adjusting the display information on the display unit to be displayed to the user based on the relative position includes adjusting display information in the left region and the right region of the instrument panel to be displayed to the user based on the relative position.

The display unit includes a central control panel, and an information structure of the central control panel includes a left region and a right region; and the adjusting the display information on the display unit to be displayed to the user based on the relative position includes adjusting display information in the left region of the central control panel to be displayed to the user based on the relative position.

The display unit includes a central control panel, and the adjusting an information structure of display information on a display unit in response to a shift of a user's line of sight on the display unit includes: when there is a driver and a front seat passenger in the vehicle, adjusting an information structure of display information in the central control panel in response to a shift of the passenger's line of sight to the central control panel if the driver's line of sight has not been detected to move to the central control panel.

The adjusting an information structure of display information on a display unit in response to a shift of a user's line of sight on the display unit includes adjusting the information structure of the display information on the display unit in response to the shift of the user's line of sight on the display unit in combination with a voice instruction.

The embodiments of the present invention further provide a control apparatus for information display, including an information structure control module, configured to adjust an information structure of display information on a display unit in response to a shift of a user's line of sight on the display unit while driving a vehicle.

The display unit includes an instrument panel, and an information structure of the instrument panel includes a left region, a middle region and a right region; and the information structure control module includes an information zooming control sub-module, configured to enlarge the middle region and display information in the middle region, shrink the left region and display information in the left region, and shrink the right region and display information in the right region when the user's line of sight moves to the middle region of the instrument panel.

The display unit includes an instrument panel, and an information structure of the instrument panel includes a left region, a middle region and a right region; and the information structure control module includes a hidden information display sub-module, configured to display corresponding display information in the right region when the user's line of sight moves to the right region of the instrument panel while the display information in the right region is hidden.

The information structure control module further includes a source information display control sub-module, configured to display source information of a notification message in the right region when the user's line of sight moves to the right region of the instrument panel if the notification message is displayed in the right region.

The information structure control module further includes a content display control sub-module, configured to display content of the notification message when a retention time of the user's line of sight at a display position corresponding to the source information exceeds a preset length of time.

The information structure control module further includes an interface display sub-module, configured to open a lower-level interface of a current interface in the left region and display corresponding information when a retention time of the user's line of sight in the left region exceeds a preset length of time.

The display unit includes a central control panel, and an information structure of the central control panel includes a right region for displaying navigation information and a left region for displaying other categories of information; and the information structure control module includes a display control sub-module for other categories of information, configured to display the corresponding other categories of information in the left region when the user's line of sight moves to the left region of the central control panel after switching the navigation information from display in the right region to display in the full panel and hiding other categories of information, where an interface on which the other categories of information are located is above an interface on which the navigation information is located.

The information structure control module further includes an information hiding control sub-module, configured to hide the other categories of information again when the user's line of sight moves to the right region of the central control panel or that the user's line of sight has left the left region of the central control panel for a preset length of time after the corresponding other categories of information are displayed in the left region.

A plurality of display panels are provided, and the information structure control module includes a display position switching control sub-module, configured to switch a notification message from a first display unit to a second display unit for display if the notification message is displayed in the first display unit and the user's line of sight is detected to shift to the second display unit in the process of receiving the notification message or within a preset length of time after the notification message is received.

The apparatus further includes a brightness adjustment module, configured to determine target brightness based on the user's line of sight, interior brightness of the vehicle and current time when the user's line of sight moves to the display unit; and adjust brightness of the display unit on which the user's line of sight falls from default brightness to the target brightness.

The apparatus further includes an information orientation control module, configured to detect a relative position of the user's head to the display unit; and adjust the display information on the display unit to be displayed to the user based on the relative position.

The display unit includes an instrument panel, and an information structure of the instrument panel includes a left region, a middle region and a right region; and the information orientation control module includes a first information display orientation control sub-module, configured to adjust display information in the left region and the right region of the instrument panel to be displayed to the user based on the relative position.

The display unit includes a central control panel, and an information structure of the central control panel includes a left region and a right region; and the information orientation control module includes a second information display orientation control sub-module, configured to adjust display information in the left region of the central control panel to be displayed to the user based on the relative position.

The information structure control module includes an information structure control sub-module responsive to a front seat passenger, configured to: when there is a driver and a front seat passenger in the vehicle, adjust an information structure of display information on the central control panel in response to a change in the passenger's line of sight on the central control panel if the driver's line of sight has not been detected to move to the central control panel.

The information structure control module includes an information structure control sub-module in response to voice and line of sight, configured to adjust the information structure of the display information on the display unit in response to the shift of the user's line of sight on the display unit in combination with a voice instruction.

The embodiments of the present invention further disclose a vehicle, including a memory and one or more programs, where the one or more programs are stored in the memory and configured to be executed by one or more processors to perform the control method for information display according to any one of the embodiments of the present invention.

The embodiments of the present invention further disclose a readable storage medium, where when instructions in the storage medium are executed by a processor of an electronic device, the electronic device is enabled to perform the control method for information display according to any one of the embodiments of the present invention.

Compared with the prior art, the embodiments of the present invention have the following advantages:

In the embodiments of the present invention, an information structure of display information on a display unit can be adjusted in response to a shift of a user's line of sight on the display unit while driving a vehicle. Therefore, the user neither needs to adapt to the information structure on the display unit, nor needs to operate, so that user experience can be improved while ensuring safety.

### BRIEF DESCRIPTION OF THE DRAWINGS

FIG. 1 is a flowchart illustrating steps of a control method for information display according to the present invention.
FIG. 2a is a schematic diagram of an information structure in an instrument panel when a user does not gaze at the instrument panel according to the present invention.
FIG. 2b is a schematic diagram of an information structure in an instrument panel when a line of sight moves to a middle region of the instrument panel according to the present invention.
FIG. 3a is a schematic diagram showing source information of a notification message displayed in a right region of an instrument panel when a line of sight moves to the right region of the instrument panel according to the present invention.
FIG. 3b is a schematic diagram showing content of a notification message displayed in a right region of an instrument panel when a line of sight moves to a display position for source information on the instrument panel according to the present invention.
FIG. 4a is a schematic diagram of an information structure in a central control panel when a line of sight moves to a left region of the central control panel according to the present invention.
FIG. 4b is a schematic diagram of an information structure in a central control panel when a line of sight moves to a right region of the central control panel according to the present invention.
FIG. 5 is a schematic diagram of a central control panel displaying a lower-level interface of a current interface when a retention time of a line of sight in a left region of the central control panel exceeds a preset length of time according to the present invention.
FIG. 6 is a schematic diagram of switching a notification message from a central control panel to an instrument panel according to the present invention.
FIG. 7a is a schematic diagram of adjusting an information display orientation in an instrument panel in response to a user's head position according to the present invention.
FIG. 7b is a schematic diagram of adjusting an information display orientation in a central control panel in response to a user's head position according to the present invention.
FIG. 8 is a structural block diagram of a control apparatus for information display according to the present invention.
FIG. 9 is a structural block diagram of a control apparatus for information display according to the present invention.

### DESCRIPTION OF EMBODIMENTS

In order to make the purpose, features and advantages of the present invention clearer and easier to understand, the present invention will be further described in detail with reference to the accompanying drawings and specific implementation.

One of the core concepts of the present invention is to adjust an information structure on a display unit in response to a shift in user's line of sight on the display unit while driving a vehicle, so that user experience can be improved while ensuring safety.

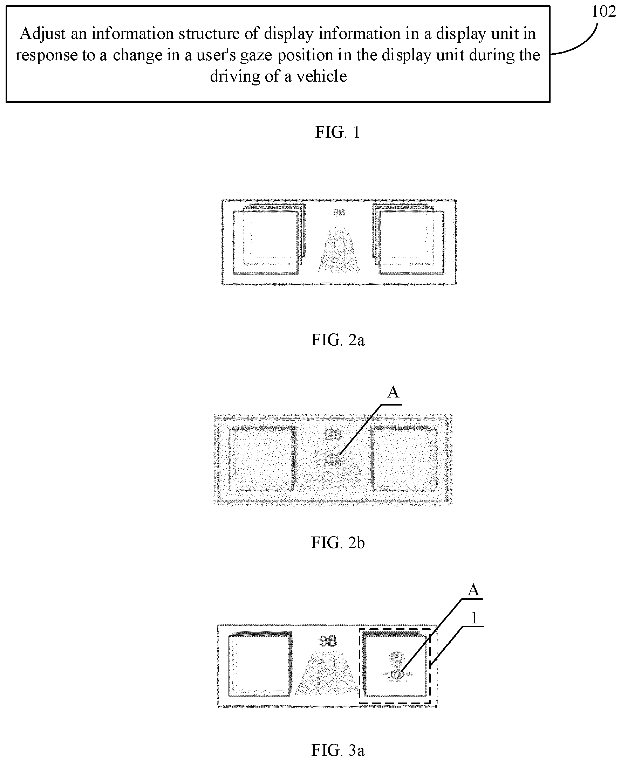

Referring to FIG. 1, a flowchart illustrating steps of a control method for information display according to the present invention is shown, which may specifically include the following steps:

Step 102: Adjust an information structure of display information on a display unit in response to a shift of a user's line of sight on the display unit while driving a vehicle.

In the present invention, a plurality of display units may be provided, such as panels (e.g., an instrument panel and a central control panel), windshields (which may be configured for head up display (HUD)), and streaming rearview mirrors, which is not limited in the present invention.

The display information on the display unit may include a variety of categories, such as navigation information, vehicle control information, and entertainment information. If various categories of information on the display unit are fixedly displayed in predefined regions, users will have poor experience in viewing the information on the display unit. Therefore, in the present invention, the shift of the user's line of sight on the display unit may be detected while driving the vehicle, and then the information structure of the display information on the display unit is adjusted in response to the shift of the user's line of sight on the display unit, for example, by enlarging display information in a region where the user's line of sight falls on the display unit, and spreading content of a notification message in a region where the user's line of sight falls on the display unit, which is not limited in the present invention.

In conclusion, in the present invention, the information structure of the display information on the display unit may be adjusted in response to the shift of the user's line of sight on the display unit while driving the vehicle. Therefore, the user neither needs to adapt to the information structure on the display unit, nor needs to operate, so that user experience can be improved while ensuring safety.

In an example of the present invention, if the display unit is a central control panel, when there is a driver and a front seat passenger in the vehicle, a method for adjusting the information structure of the display information on the display unit in response to the shift of the user's line of sight on the display unit may include: adjusting an information structure of display information in the central control panel in response to a shift of the passenger's line of sight to the central control panel if the driver's line of sight has not been detected to move to the central control panel. Therefore, when the driver does not use the central control panel, the information structure of the display information in the central control panel may be adjusted in response to the shift in the passenger's line of sight on the central control panel to improve experience of the passenger on the front seat.

In the present invention, information structures of display information in different display units are different, and accordingly, the information structures of the display information in different display units are adjusted by different methods in response to changes in the user's line of sight in the different display units.

The following takes a display unit as an instrument panel to describe the method for adjusting an information structure of display information on the instrument panel in response to a shift of a user's line of sight on the instrument panel while driving the vehicle.

In the present invention, an information structure of the instrument panel includes a left region, a middle region and a right region. As an example of the present invention, the left region of the instrument panel may be used to display vehicle control information, where the vehicle control information may refer to information related to vehicle control, such as seat control information and air conditioner control information. The middle region of the instrument panel may be used to display driving information, where the driving information may refer to driving-related information such as a vehicle condition, a vehicle speed, and lane information. The right region of the instrument panel may be used to display notification messages, some entertainment-related information and navigation information. Display information in the left region and the right region may be displayed in the form of cards.

Because the user may view driving information frequently while driving, in order to make the user easier to view the driving information, In the present invention, the adjusting an information structure of display information on a display unit in response to a shift of a user's line of sight on the display unit includes: enlarging the middle region and display information in the middle region, shrinking the left region and display information in the left region, and shrinking the right region and display information in the right region when the user's line of sight moves to the middle region of the instrument panel. Therefore, the user experience in viewing information on the display unit is improved by zooming in information focused on by the user and zooming out information not focused on by the user. The user's line of sight may be determined by acquiring an image collected by an in-vehicle camera, and then detecting line of sight by using a line of sight tracking algorithm based on the image.

FIG. 2a is a schematic diagram of an information structure in an instrument panel when a user does not gaze at the instrument panel. FIG. 2b is a schematic diagram of an information structure on the instrument panel when the user's line of sight is detected to shift to a middle region of the instrument panel. A in FIG. 2b indicates the focus of the user's sight.

In the present invention, because a notification message is displayed in the right region of the instrument panel, display information in the right region of the instrument panel may be hidden by default to protect the privacy of the driver, and displayed when the user gazes at the right region. Accordingly, a method for adjusting an information structure of display information on a display unit in response to a shift of a user's line of sight on the display unit may include, when the display information in the right region is hidden, displaying corresponding display information in the right region when the user's line of sight moves to the right region of the instrument panel.

While driving of the vehicle, notification messages such as incoming calls, SMS messages and messages from social media may be received. When these notification messages are displayed in the right region of the instrument panel, source information of these notification messages may be displayed when the user gazes at the right region in order to ensure the privacy of the driver. Therefore, it is convenient for the driver to determine based on the source information whether to read the notification messages. In the present invention, a method for adjusting an information structure of display information on a display unit in response to a shift of a user's line of sight on the display unit may include: displaying source information of a notification message in the right region when the user's line of sight moves to the right region of the instrument panel if the notification message is displayed in the right region. Referring to FIG. 3a, where A indicates the focus of the user's sight, and 1 indicates the display region for the source information. The source information may refer to information related to a source of the notification message, such as sender identification of the message, e.g., name, for example, "** sent an SMS message", which is not limited in the present invention.

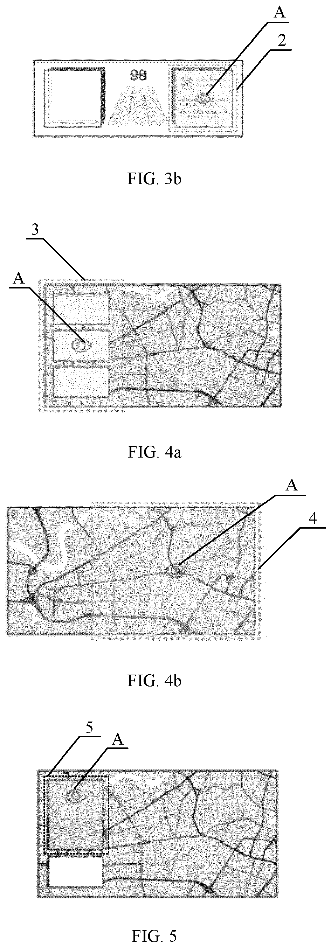

When the user keeps focusing on the notification message, it can be determined that the user needs to view content of the notification message. Accordingly, a method for adjusting an information structure of display information on a display unit in response to a shift of a user's line of sight on the display unit may include displaying content of the notification message when a retention time of the user's line of sight at a display position corresponding to the source information exceeds a preset length of time. The preset length of time may be set as required, which is not limited in the present invention. For example, referring to FIG. 3b, where A indicates the focus of the user's sight, and 2 indicates the display region corresponding to the content of the notification message. In the present invention, part or all of the content of the notification message may be displayed, depending on the number of texts contained in the corresponding content of the notification message.

In the present invention, a method for adjusting an information structure of display information on a display unit in response to a shift of a user's line of sight on the display unit may include adjusting the information structure of the display information on the display unit in response to the shift of the user's line of sight on the display unit in combination with a voice instruction.

Accordingly, when the source information of the notification message is displayed in the right region of the instrument panel, a method for adjusting an information structure of display information on a display unit in response to a shift of a user's line of sight on the display unit may include: displaying content of the notification message when the user's line of sight moves to a display position corresponding to the source information and detecting a voice instruction for displaying the content. Therefore, the content of the notification message can be opened without needing the driver to keep eyes on the source information for the preset length of time, thereby reducing driving risks and improving user experience.

In the present invention, if display information in the left region of the instrument panel is displayed in the form of cards, one card may be set to correspond to one kind of vehicle control information, including, for example, an energy consumption card displaying energy consumption information, a seat card displaying seat status information, and an air conditioner card displaying air conditioner status information. Due to a limited area of a card, all information contained in some kind of vehicle control information cannot be fully displayed. Therefore, a multi-level interface such as a two-level interface may be set for the card to display all the information. For example, energy consumption information includes an energy consumption line chart, total mileage energy consumption, one-way energy consumption, and instantaneous energy consumption. The line chart may be displayed in a level 1 interface, and energy consumption information such as total mileage energy consumption, one-way energy consumption and instantaneous energy consumption may be displayed in a level 2 interface. The level 1 interface is displayed by default due to a higher display hierarchy than the level 2 interface. In order to facilitate the driver to quickly view information in the level 2 interface while driving, a method for adjusting an information structure of display information on a display unit in response to a shift of a user's line of sight on the display unit in the present invention may include: opening a lower-level interface of a current interface in the left region and displaying corresponding information when a retention time of the user's line of sight in the left region exceeds a preset length of time. The preset length of time may be set as required, which is not limited in the present invention.

In the present invention, a method for controlling information display in an in-vehicle display unit in response to user's line of sight may include: opening a lower-level interface of a current interface in the left region and displaying corresponding information when the user's line of sight moves to the left region of the instrument panel and detecting a voice instruction for opening the lower-level interface. Therefore, the lower-level interface of the current interface can be opened without needing the driver to keep eyes on the current interface for a third preset length of time, thereby reducing driving risks and improving user experience.

For example, the following takes a display unit as a central control panel to describe the method for adjusting an information structure of display information in the central control panel in response to a shift of a user's line of sight on the central control panel while driving the vehicle.

In the present invention, an information structure of the central control panel includes a right region for displaying navigation information and a left region for displaying other categories of information. The other categories of information may refer to information other than the navigation information, and may include various types, such as account notifications, content recommendations and entertainment application portals, which is not limited in the present invention. The other categories of information may also be displayed in the form of cards.

After navigation is enabled, in order to facilitate better viewing of the navigation and to protect the privacy of the driver, the navigation information may be switched from display in the right region to display in the full panel while hiding other categories of information. Display information in the left region is displayed when the user gazes at the left region. Accordingly, a method for adjusting an information structure of display information on a display unit in response to a shift of a user's line of sight on the display unit may include: displaying the corresponding other categories of information in the left region when the user's line of sight moves to the left region of the central control panel after switching the navigation information from display in the right region to display in the full panel and hiding other categories of information, where an interface on which the other categories of information are located is above an interface on which the navigation information is located. For example, FIG. 4a is a schematic diagram of display information in the left region when the user's line of sight is detected to shift to the left region of the central control panel. In FIG. 4a, A indicates the focus of the user's sight, and 3 indicates the left region for displaying the other categories of information.

In the present invention, a method for adjusting an information structure of display information on a display unit in response to a shift of a user's line of sight on the display unit may include: hiding the other categories of information again when the user's line of sight moves to the right region of the central control panel or that the user's line of sight has left the left region of the central control panel for a preset length of time after the corresponding other categories of information are displayed in the left region. For example, FIG. 4b shows an information structure in the central control panel when the user's line of sight is detected to shift to the right region of the central control panel. In FIG. 4b, A indicates the focus of the user's sight, and 4 indicates the right region for displaying the navigation information. Therefore, the other categories of information can be hidden when the user does not focus on the other categories of information, thereby reducing obscuration of the navigation information by the other categories of information and protecting the privacy of the driver. The preset length of time may be set as required, which is not limited in the present invention.

Certainly, if notification messages such as incoming calls, SMS messages and messages from social media are received and displayed in the left region of the central control panel, a method for adjusting an information structure of display information on a display unit in response to a shift of a user's line of sight on the display unit may include: displaying source information of a notification message in the left region when the user's line of sight moves to the left region of the instrument panel if the notification message is displayed in the left region. Therefore, the driver is allowed to determine whether to read the notification messages based on the source information, thereby further enhancing the privacy of the driver.

When the user keeps focusing on the notification message, it can be determined that the user needs to view content of the notification message. Accordingly, a method for adjusting an information structure of display information on a display unit in response to a shift of a user's line of sight on the display unit may include displaying content of the notification message when a retention time of the user's line of sight at a display position corresponding to the source information exceeds a preset length of time. The preset length of time may be set as required, which is not limited in the present invention.

In the present invention, when source information of a notification message is displayed in the left region of the central control panel, a method for adjusting an information structure of display information on a display unit in response to a shift of a user's line of sight on the display unit may include: displaying the content of the notification message when the user's line of sight moves to a display position corresponding to the source information and detecting a voice instruction for displaying the content. Therefore, the content of the notification message can be opened without needing the driver to keep eyes on the source information for the preset length of time, thereby reducing driving risks and improving user experience.

In the present invention, a method for adjusting an information structure of display information on a display unit in response to a shift of a user's line of sight on the display unit may include: opening a lower-level interface of a current interface in the left region and displaying corresponding information when a retention time of the user's line of sight in the left region exceeds a preset length of time. The preset length of time may be set as required, which is not limited in the present invention. FIG. 5 shows a lower-level interface (5 as shown in FIG. 5) of a current interface in the left region when a retention time of the user's line of sight in the left region of the central control panel exceeds a preset length of time. A in FIG. 5 indicates the focus of the user's sight.

In the present invention, a method for controlling information display in an in-vehicle display unit in response to user's line of sight may include: opening a lower-level interface of a current interface in the left region and displaying corresponding information when the user's line of sight moves to the left region of the central control panel and detecting a voice instruction for opening the lower-level interface. Therefore, the lower-level interface of the current interface can be opened without needing the driver to keep eyes on the current interface for a third preset length of time, thereby reducing driving risks and improving user experience.

It should be noted that the preset length of time mentioned in the above embodiment may be set to the same value or different values, which is not limited in the present invention.

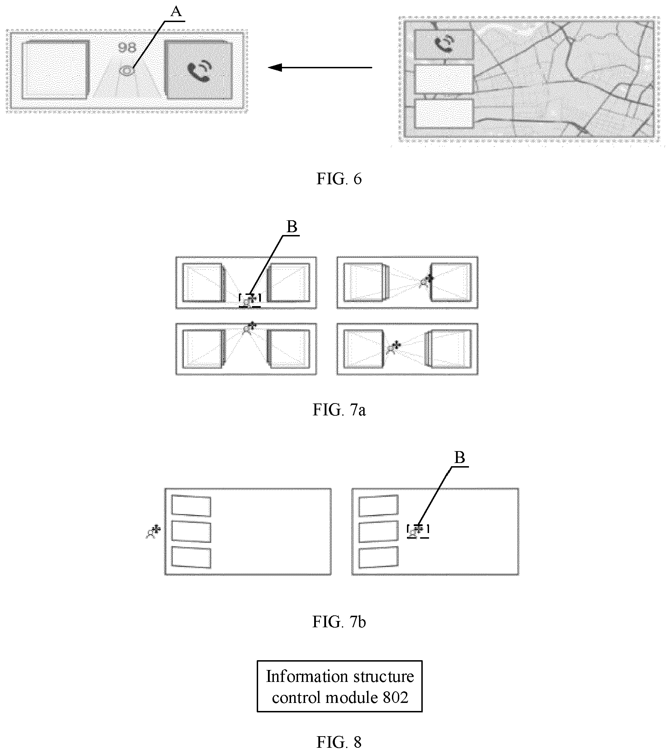

In the present invention, when a plurality of display units are provided, a method for adjusting an information structure of display information on a display unit in response to a shift of a user's line of sight on the display unit includes: switching a notification message from a first display unit to a second display unit for display if the notification message is displayed in the first display unit and the user's line of sight is detected to shift to the second display unit in the process of receiving the notification message or within a preset length of time after the notification message is received. Therefore, the information is dynamically displayed on the display unit where the user's line of sight falls according to user's gaze. As an example of the present invention, when an incoming call is received, the corresponding call reminder is displayed in the central control panel, and the call reminder may be displayed on the instrument panel When the user looks at the instrument panel. Refer to FIG. 6. A in FIG. 6 indicates the focus of the user's sight. As another example of the present invention, when a message is received, reminder information corresponding to the message is displayed on the instrument panel; and within a fourth preset length of time after the message is received, the reminder information of the message is displayed on the central control panel When the user looks at the central control panel.

Excessive low brightness of the display unit will affect information reading of the user, and excessive high brightness of the display unit may lead to distraction in driving, and may cause reflection on the windshield to some extent while driving at night. Therefore, there is some potential safety hazards. In the present invention, the brightness of the display unit may also be adjusted in response to the shift of the user's line of sight on the display unit, which includes: when the user's line of sight moves to the display unit, determining target brightness based on the user's line of sight, interior brightness of the vehicle and current time, and adjusting the brightness of the display unit on which the user's line of sight falls from default brightness to the target brightness. The default brightness is determined based on the interior brightness and the current time, and may refer to the brightness that can ensure safe driving. The determining target brightness based on a user's line of sight, interior brightness and current time is equivalent to taking line of sight as a parameter for automatic brightness adjustment to determine the target brightness. Therefore, this embodiment of the present invention enables the user to better read information on the display unit while ensuring safe driving.

In the present invention, an orientation of the display information on the display unit may also be adjusted in response to a relative position of the user's head to the display unit, so as to exhibit a parallax effect and further improve user experience. The relative position of the user's head to the display unit may be detected, and the display information on the display unit may be adjusted to be displayed to the user based on the relative position.

When the display unit is an instrument panel, a method for adjusting the display information on the display unit to be displayed to the user based on the relative position includes adjusting display information in the left region and the right region of the instrument panel to be displayed to the user based on the relative position. As an example of the present invention, referring to FIG. 7a, card display styles on the instrument panel vary with head positions.

When the display unit is a central control panel, a method for adjusting the display information on the display unit to be displayed to the user based on the relative position includes adjusting display information in the left region of the central control panel to be displayed to the user based on the relative position. As an example of the present invention, FIG. 7b shows that card display styles on the central control panel vary with head positions. B in FIG. 7a and FIG. 7b indicates the user's head position.

Referring to FIG. 8, a structural block diagram of a control apparatus for information display according to the present invention is shown, which may specifically include the following module:
an information structure control module 802, configured to adjust an information structure of display information on a display unit in response to a shift of a user's line of sight on the display unit while driving a vehicle.

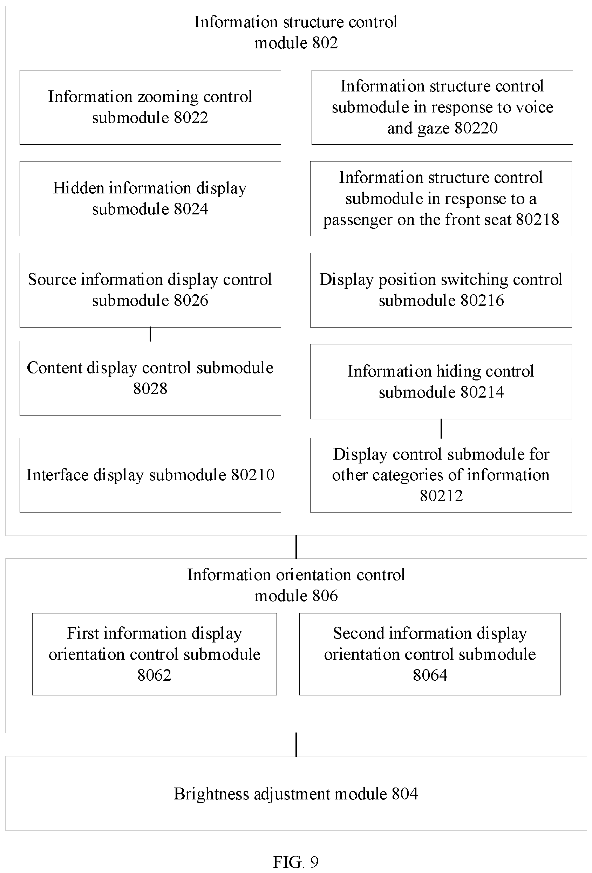

Referring to FIG. 9, a structural block diagram of a control apparatus for information display according to an optional embodiment of the present invention is shown.

In the present invention, the display unit includes an instrument panel, and an information structure of the instrument panel includes a left region, a middle region and a right region; and the information structure control module 802 includes:
an information zooming control sub-module 8022, configured to enlarge the middle region and display information in the middle region, shrink the left region and display information in the left region, and shrink the right region and display information in the right region when the user's line of sight moves to the middle region of the instrument panel.

In the present invention, the display unit includes an instrument panel, and an information structure of the instrument panel includes a left region, a middle region and a right region; and the information structure control module 802 includes:
a hidden information display sub-module 8024, configured to display corresponding display information in the right region when the user's line of sight moves to the right region of the instrument panel while the display information in the right region is hidden.

In the present invention, the information structure control module 802 further includes:
a source information display control sub-module 8026, configured to display source information of a notification message in the right region when the user's line of sight moves to the right region of the instrument panel if the notification message is displayed in the right region.

In the present invention, the information structure control module 802 further includes:
a content display control sub-module 8028, configured to display content of the notification message when a retention time of the user's line of sight at a display position corresponding to the source information exceeds a preset length of time.

In the present invention, the information structure control module 802 further includes:
an interface display sub-module 80210, configured to open a lower-level interface of a current interface in the left region and display corresponding information when a retention time of the user's line of sight in the left region exceeds a preset length of time.

In the present invention, the display unit includes a central control panel, and an information structure of the central control panel includes a right region for displaying navigation information and a left region for displaying other categories of information; and the information structure control module 802 includes:
a display control sub-module for other categories of information 80212, configured to display corresponding other categories of information in the left region when the user's line of sight moves to the left region of the central control panel after switching the navigation information from display in the right region to display in the full panel and hiding other categories of information, where an interface on which the other categories of information are located is above an interface on which the navigation information is located.

In the present invention, a plurality of display panels are provided, and the information structure control module 802 further includes:
an information hiding control sub-module 80214, configured to hide the other categories of information again when the user's line of sight moves to the right region of the central control panel or that the user's line of sight has left the left region of the central control panel for a preset length of time after the corresponding other categories of information are displayed in the left region.

In the present invention, a plurality of display panels are provided, and the information structure control module 802 includes:
a display position switching control sub-module 80216, configured to switch a notification message from a first display unit to a second display unit for display if the notification message is displayed in the first display unit and the user's line of sight is detected to shift to the second display unit in the process of receiving the notification message or within a preset length of time after the notification message is received.

In the present invention, the apparatus further includes:
a brightness adjustment module 804, configured to determine target brightness based on the user's line of sight, interior brightness of the vehicle and current time when the user's line of sight moves to the display unit, and adjust brightness of the display unit on which the user's line of sight falls from default brightness to the target brightness.

In the present invention, the apparatus further includes: an information orientation control module 806, configured to detect a relative position of the user's head to the display unit; and adjust the display information on the display unit to be displayed to the user based on the relative position.

In the present invention, the display unit includes an instrument panel, and an information structure of the instrument panel includes a left region, a middle region and a right region; and the information orientation control module 806 includes:
a first information display orientation control sub-module 8062, configured to adjust display information in the left region and the right region of the instrument panel to be displayed to the user based on the relative position.

In the present invention, the display unit includes a central control panel, and an information structure of the central control panel includes a left region and a right region; and the information orientation control module 806 includes:
a second information display orientation control sub-module 8064, configured to adjust display information in the left region of the central control panel to be displayed to the user based on the relative position.

In the present invention, the information structure control module 802 includes:
an information structure control sub-module responsive to a front seat passenger 80218, configured to, when there is a driver and a front seat passenger in the vehicle, adjust an information structure of display information in the central control panel in response to a shift of the passenger's line of sight to the central control panel if the driver's line of sight has not been detected to move to the central control panel.

In the present invention, the information structure control module 802 includes:
an information structure control sub-module in response to voice and line of sight 80220, configured to adjust the information structure of the display information on the display unit in response to the shift of the user's line of sight on the display unit in combination with a voice instruction.

In conclusion, In the present invention, the information structure of the display information on the display unit may be adjusted in response to the shift of the user's line of sight on the display unit while driving the vehicle. Therefore, the user neither needs to adapt to the information structure on the display unit, nor needs to operate, so that user experience can be improved while ensuring safety.

Because the apparatus embodiments are basically similar to the method embodiments, the description is relatively simple. Refer to the description of the method embodiments for relevant content.

The present invention further discloses a vehicle, including a memory and one or more programs, where the one or more programs are stored in the memory and configured to be executed by one or more processors to perform the control method for information display according to any one of the embodiments of the present invention.

The present invention further discloses a readable storage medium, where when instructions in the storage medium are executed by a processor of an electronic device, the electronic device is enabled to perform the control method for information display according to any one of the embodiments of the present invention.

All embodiments in the specification are described in a progressive manner, with each embodiment focusing on differences from the other embodiments. The same and similar parts among the embodiments can be referred to each other.

It should be understood by a person skilled in the art that embodiments of the present invention may be provided as methods, apparatuses or computer program products. Therefore, embodiments of the present invention may be implemented using hardware, software or a combination thereof. Furthermore, embodiments of the present invention may take the form of a computer program product embodied in one or more computer-usable storage media (including but not limited to disk memory, CD-ROM and optical memory) having computer-usable program codes therein.

Embodiments of the present invention are described herein with reference to flowchart illustrations and/or block diagrams of methods, terminal devices (systems) and computer program products according to embodiments of the present invention. It should be understood that each flow and/or block of the flowchart illustrations and/or block diagrams, and combinations of flows and/or blocks in the flowchart illustrations and/or block diagrams, can be implemented by computer program instructions. These computer program instructions may be provided to a processor of a general purpose computer, special purpose computer, embedded processor or other programmable data processing terminal devices to produce a machine, such that the instructions, which execute via the processor of the computer or other programmable data processing terminal devices, create means for implementing the functions specified in one or more flows of the flowchart illustrations and/or one or more blocks of the block diagrams.

These computer program instructions may also be stored in a computer readable memory that can direct a computer or other programmable data processing terminal devices to function in a particular manner, such that the computer readable memory having instructions stored therein comprises an article of manufacture including instructions which implement the functions specified in one or more flows of the flowchart illustrations and/or one or more blocks of the block diagrams.

These computer program instructions may also be loaded onto a computer or other programmable data processing terminal devices to cause a series of operational steps to be performed on the computer or other programmable terminal devices to produce a computer-implemented processing, such that the instructions which execute on the computer or other programmable terminal devices provide steps for implementing the functions specified in one or more flows of the flowchart illustrations and/or one or more blocks of the block diagrams.

While preferred embodiments of the present invention have been described, additional variations and modifications in those embodiments may occur to those skilled in the art once they learn of the basic inventive concepts.

Finally, it should be noted that relational terms such as first, second, and the like may be used herein solely to distinguish one entity or action from another entity or action without necessarily requiring or implying any such actual relationship or order between such entities or actions. As used herein, the terms "comprises", "comprising" or any other variation thereof are intended to cover a non-exclusive inclusion, such that a process, method, article or terminal device that comprises a list of elements does not include only those elements, but may include other elements not explicitly listed or inherent to such process, method, article or terminal device. Without further restrictions, the elements defined by the sentence "including a..." do not exclude the existence of other identical elements in the process, method, article or terminal device including the elements.

A control method for information display, a control apparatus for information display and a vehicle provided by the present invention are described in detail above. Specific examples are used herein to illustrate the principle and implementation of the present invention. The above embodiments are described merely to help understand the method of the present invention and the core ideas thereof. Meanwhile, for those skilled in the art, there may be changes in the specific implementation and application scope according to the present invention. To sum up, the content of the specification should not be construed as limitations to the present invention.

## Claims

1. A control method for information display, comprising:
adjusting an information structure of display information on a display unit in response to a shift of a user's line of sight (A) on the display unit while driving a vehicle (102),
**characterized in that**:
information is displayed in an area on the display unit via a multi-level interface, the multi-level interface comprises an upper-level interface for displaying a first portion of the information by default and a lower-level interface for displaying a second portion of the information; and
said adjusting the information structure of display information on the display unit in response to a shift of a user's line of sight (A) on the display unit (102) comprises:
opening the lower-level interface of the multi-level interface and displaying the second portion of the information when a retention time of the user's line of sight (A) in the area exceeds a preset length of time.

2. The method according to claim 1, wherein the display unit comprises an instrument panel, and an information structure of the instrument panel comprises a left region, a middle region and a right region, and wherein
said adjusting the information structure of display information on the display unit in response to a shift of a user's line of sight (A) on the display unit (102) comprises:
when the user's line of sight (A) moves to the middle region of the instrument panel, enlarging the middle region and display information in the middle region, shrinking the left region and display information in the left region, and shrinking the right region and display information in the right region; or
when the display information in the right region is hidden, displaying corresponding display information in the right region when the user's line of sight (A) moves to the right region of the instrument panel.

3. The method according to claim 2, wherein said adjusting the information structure of display information on the display unit in response to a shift of a user's line of sight (A) on the display unit (102) further comprises:
if notification messages are displayed in the right region, displaying source information of the notification messages in the right region when the user's line of sight (A) moves to the right region of the instrument panel; or
opening a lower-level interface of a current interface in the left region and displaying corresponding information when a retention time of the user's line of sight (A) in the left region exceeds a preset length of time.

4. The method according to claim 3, wherein said adjusting the information structure of display information on the display unit in response to a shift of a user's line of sight (A) on the display unit (102) further comprises:
displaying content of the notification message when a retention time of the user's line of sight (A) in a display area for the source information exceeds a preset length of time.

5. The method according to claim 1, wherein:
the display unit comprises a central control panel, and an information structure of the central control panel comprises a right region for displaying navigation information and a left region for displaying other categories of information; and
said adjusting the information structure of display information on the display unit in response to a shift of a user's line of sight (A) on the display unit (102) comprises:
if, after switching the navigation information from display in the right region to display in the full panel and hiding other categories of information, the user's line of sight (A) moves to the left region of the central control panel, displaying the corresponding other categories of information in the left region,
wherein an interface on which the other categories of information are located is above an interface on which the navigation information is located.

6. The method according to claim 5, wherein said adjusting the information structure of display information on the display unit in response to a shift of a user's line of sight (A) on the display unit (102) further comprises:
hiding the other categories of information again when the user's line of sight (A) moves to the right region of the central control panel or the user's line of sight (A) has left the left region of the central control panel for a preset length of time after the other categories of information are displayed in the left region.

7. The method according to claim 1, wherein a plurality of display units are provided, and said adjusting the information structure of display information on the display unit in response to a shift of a user's line of sight (A) on the display unit (102) comprises:
switching a notification message from a first display unit to a second display unit for display if the notification message is displayed in the first display unit and the user's line of sight (A) shifts to the second display unit in the process of receiving the notification message or within a preset length of time after the notification message is received.

8. The method according to claim 1, further comprising:
when the user's line of sight (A) moves to the display unit, determining target brightness based on the user's line of sight (A), interior brightness of the vehicle and current time; and
adjusting brightness of the display unit on which the user's line of sight (A) falls from default brightness to the target brightness.

9. The method according to claim 1, further comprising:
detecting a relative position of the user's head (B) to the display unit; and
adjusting the display information on the display unit to be displayed to the user based on the relative position (B).

10. The method according to claim 9, wherein:
the display unit comprises an instrument panel, and an information structure of the instrument panel comprises a left region, a middle region and a right region, and
said adjusting the display information on the display unit to be displayed to the user based on the relative position (B) comprises adjusting display information in the left region and the right region of the instrument panel to be displayed to the user based on the relative position (B); or
the display unit comprises a central control panel, and an information structure of the central control panel comprises a left region and a right region, and
said adjusting the display information on the display unit to be displayed to the user based on the relative position (B) comprises adjusting display information in the left region of the central control panel to be displayed to the user based on the relative position (B).

11. The method according to claim 1, wherein the display unit comprises a central control panel, and said adjusting the information structure of display information on the display unit in response to a shift of a user's line of sight (A) on the display unit (102) comprises:
when there is a driver and a front seat passenger in the vehicle, adjusting an information structure of display information in the central control panel in response to a shift of the passenger's line of sight (A) to the central control panel if the driver's line of sight (A) has not been detected to move to the central control panel.

12. The method according to claim 1, wherein said adjusting the information structure of display information on the display unit in response to a shift of a user's line of sight (A) on the display unit (102) comprises:
adjusting the information structure of the display information on the display unit in response to a shift of a user's line of sight (A) on the display unit in combination with a voice instruction.

13. A control apparatus for information display, comprising:
an information structure control module (802), configured to adjust an information structure of display information on a display unit in response to a shift of a user's line of sight (A) on the display unit while driving a vehicle (102),
**characterized in that**:
information is displayed in an area on the display unit via a multi-level interface, the multi-level interface comprises an upper-level interface for displaying a first portion of the information by default and a lower-level interface for displaying a second portion of the information; and
said adjusting the information structure of display information on the display unit in response to a shift of a user's line of sight (A) on the display unit (102) comprises:
opening the lower-level interface of the multi-level interface and displaying the second portion of the information when a retention time of the user's line of sight (A) in the area exceeds a preset length of time.

14. A vehicle, comprising a memory and one or more programs stored in the memory, the vehicle configured to execute the one or more programs by one or more processors to perform the control method for information display according to any one of claims 1 to 12.

15. A readable storage medium comprising instructions, wherein when the instructions in the storage medium are executed by a processor of an electronic device, the electronic device is caused to perform the control method for information display according to any one of claims 1 to 12.

## Patentansprüche

1. Steuerverfahren zum Anzeigen von Informationen, das Folgendes beinhaltet:
Justieren einer Informationsstruktur von Anzeigeinformationen auf einer Anzeigeeinheit als Reaktion auf eine Verschiebung der Sichtlinie (A) eines Benutzers auf der Anzeigeeinheit beim Fahren eines Fahrzeugs (102),
**dadurch gekennzeichnet, dass**:
Informationen in einem Bereich auf der Anzeigeeinheit über eine Multi-Level-Schnittstelle angezeigt werden, wobei die Multi-Level-Schnittstelle eine Upper-Level-Schnittstelle zum Anzeigen eines ersten Teils der Informationen als Vorgabe und eine Lower-Level-Schnittstelle zum Anzeigen eines zweiten Teils der Informationen umfasst; und
das genannte Justieren der Informationsstruktur von Anzeigeinformation auf der Anzeigeeinheit als Reaktion auf eine Verschiebung der Sichtlinie (A) eines Benutzers auf der Anzeigeeinheit (102) Folgendes beinhaltet:
Öffnen der Lower-Level-Schnittstelle der Multi-Level-Schnittstelle und Anzeigen des zweiten Teils der Information, wenn eine Verweildauer der Sichtlinie (A) des Benutzers in dem Bereich eine voreingestellte Zeitspanne überschreitet.

2. Verfahren nach Anspruch 1, wobei die Anzeigeeinheit eine Instrumententafel umfasst und eine Informationsstruktur der Instrumententafel eine linke Region, eine mittlere Region und eine rechte Region umfasst, und wobei
das genannte Justieren der Informationsstruktur von Anzeigeinformationen auf der Anzeigeeinheit als Reaktion auf eine Verschiebung der Sichtlinie (A) eines Benutzers auf der Anzeigeeinheit (102) Folgendes beinhaltet:
Vergrößern, wenn sich die Sichtlinie (A) des Benutzers zur mittleren Region der Instrumententafel bewegt, der mittleren Region und der Anzeigeinformationen in der mittleren Region, Verkleinern der linken Region und der Anzeigeinformationen in der linken Region, und Verkleinern der rechten Region und der Anzeigeinformationen in der rechten Region; oder
Anzeigen, wenn die Anzeigeinformationen in der rechten Region ausgeblendet sind, der entsprechenden Anzeigeinformationen in der rechten Region, wenn sich die Sichtlinie (A) des Benutzers zur rechten Region der Instrumententafel bewegt.

3. Verfahren nach Anspruch 2, wobei das genannte Justieren der Informationsstruktur von Anzeigeinformationen auf der Anzeigeeinheit als Reaktion auf eine Verschiebung der Sichtlinie (A) eines Benutzers auf der Anzeigeeinheit (102) ferner Folgendes beinhaltet:
Anzeigen, wenn Benachrichtigungsmeldungen in der rechten Region angezeigt werden, von Quellinformationen der Benachrichtigungsmeldungen in der rechten Region, wenn sich die Sichtlinie (A) des Benutzers zur rechten Region der Instrumententafel bewegt; oder
Öffnen einer Lower-Level-Schnittstelle einer aktuellen Schnittstelle in der linken Region und Anzeigen entsprechender Informationen, wenn eine Verweildauer der Sichtlinie (A) des Benutzers in der linken Region eine voreingestellte Zeitspanne überschreitet.

4. Verfahren nach Anspruch 3, wobei das genannte Justieren der Informationsstruktur von Anzeigeinformationen auf der Anzeigeeinheit als Reaktion auf eine Verschiebung der Sichtlinie (A) eines Benutzers auf der Anzeigeeinheit (102) ferner Folgendes beinhaltet:
Anzeigen von Inhalt der Benachrichtigungsmeldung, wenn eine Verweildauer der Sichtlinie (A) des Benutzers in einem Anzeigebereich für die Quellinformationen eine voreingestellte Zeitspanne überschreitet.

5. Verfahren nach Anspruch 1, wobei:
die Anzeigeeinheit ein zentrales Bedienfeld umfasst und eine Informationsstruktur des zentralen Bedienfelds eine rechte Region zum Anzeigen von Navigationsinformationen und eine linke Region zum Anzeigen anderer Informationskategorien umfasst; und
das genannte Justieren der Informationsstruktur von Anzeigeinformationen auf der Anzeigeeinheit als Reaktion auf eine Verschiebung der Sichtlinie (A) eines Benutzers auf der Anzeigeeinheit (102) Folgendes beinhaltet:
Anzeigen, wenn sich nach dem Umschalten der Navigationsinformationen von der Anzeige in der rechten Region zur Anzeige im vollständigen Bedienfeld und dem Ausblenden anderer Informationskategorien die Sichtlinie (A) des Benutzers zur linken Region des zentralen Bedienfelds bewegt, der entsprechenden anderen Informationskategorien in der linken Region,
wobei eine Schnittstelle, auf der sich die anderen Informationskategorien befinden, über einer Schnittstelle liegt, auf der sich die Navigationsinformationen befinden.

6. Verfahren nach Anspruch 5, wobei das genannte Justieren der Informationsstruktur von Anzeigeinformationen auf der Anzeigeeinheit als Reaktion auf eine Verschiebung der Sichtlinie (A) eines Benutzers auf der Anzeigeeinheit (102) ferner Folgendes beinhaltet:
erneutes Ausblenden der anderen Informationskategorien, wenn sich die Sichtlinie (A) des Benutzers zur rechten Region des zentralen Bedienfelds bewegt oder die Sichtlinie (A) des Benutzers die linke Region des zentralen Bedienfelds für eine voreingestellte Zeitspanne verlassen hat, nachdem die anderen Informationskategorien in der linken Region angezeigt wurden.

7. Verfahren nach Anspruch 1, wobei mehrere Anzeigeeinheiten vorgesehen sind und das genannte Justieren der Informationsstruktur von Anzeigeinformationen auf der Anzeigeeinheit als Reaktion auf eine Verschiebung der Sichtlinie (A) eines Benutzers auf der Anzeigeeinheit (102) Folgendes beinhaltet:
Umschalten einer Benachrichtigungsmeldung von einer ersten Anzeigeeinheit auf eine zweite Anzeigeeinheit zur Anzeige, wenn die Benachrichtigungsmeldung in der ersten Anzeigeeinheit angezeigt wird und die Sichtlinie (A) des Benutzers sich während des Empfangs der Benachrichtigungsmeldung oder innerhalb einer voreingestellten Zeitspanne nach dem Empfang der Benachrichtigungsmeldung zur zweiten Anzeigeeinheit verschiebt.

8. Verfahren nach Anspruch 1, das ferner Folgendes beinhaltet:
Bestimmen, wenn sich die Sichtlinie (A) des Benutzers zur Anzeigeeinheit bewegt, der Zielhelligkeit auf der Basis der Sichtlinie (A) des Benutzers, der Innenhelligkeit des Fahrzeugs und der aktuellen Zeit; und
Justieren der Helligkeit der Anzeigeeinheit, auf die die Sichtlinie des Benutzers (A) fällt, von der Standardhelligkeit auf die Zielhelligkeit.

9. Verfahren nach Anspruch 1, das ferner Folgendes beinhaltet:
Erkennen einer relativen Position des Kopfs (B) des Benutzers zur Anzeigeeinheit; und
Justieren der dem Benutzer anzuzeigenden Anzeigeinformationen auf der Anzeigeeinheit auf der Basis der relativen Position (B).

10. Verfahren nach Anspruch 9, wobei:
die Anzeigeeinheit eine Instrumententafel umfasst und eine Informationsstruktur der Instrumententafel eine linke Region, eine mittlere Region und eine rechte Region umfasst, und
das genannte Justieren der dem Benutzer anzuzeigenden Anzeigeinformationen auf der Anzeigeeinheit auf der Basis der relativen Position (B) das Justieren von dem Benutzer anzuzeigenden Anzeigeinformationen in der linken Region und der rechten Region der Instrumententafel auf der Basis der relativen Position (B) beinhaltet; oder
die Anzeigeeinheit ein zentrales Bedienfeld umfasst, und eine Informationsstruktur des zentralen Bedienfelds eine linke Region und eine rechte Region umfasst, und
das genannte Justieren der dem Benutzer anzuzeigenden Anzeigeinformationen auf der Anzeigeeinheit auf der Basis der relativen Position (B) das Justieren von dem Benutzer anzuzeigenden Anzeigeinformationen in der linken Region des zentralen Bedienfelds auf der Basis der relativen Position (B) beinhaltet.

11. Verfahren nach Anspruch 1, wobei die Anzeigeeinheit ein zentrales Bedienfeld umfasst und das genannte Justieren der Informationsstruktur von Anzeigeinformationen auf der Anzeigeeinheit als Reaktion auf eine Verschiebung der Sichtlinie (A) eines Benutzers auf der Anzeigeeinheit (102) Folgendes beinhaltet:
Justieren, wenn sich ein Fahrer und ein Beifahrer in dem Fahrzeug befinden, einer Informationsstruktur von Anzeigeinformationen in dem zentralen Bedienfeld als Reaktion auf eine Verschiebung der Sichtlinie (A) des Beifahrers zum zentralen Bedienfeld, wenn nicht erkannt wurde, dass sich die Sichtlinie (A) des Fahrers zum zentralen Bedienfeld bewegt.

12. Verfahren nach Anspruch 1, wobei das genannte Justieren der Informationsstruktur von Anzeigeinformationen auf der Anzeigeeinheit als Reaktion auf eine Verschiebung der Sichtlinie (A) eines Benutzers auf der Anzeigeeinheit (102) Folgendes beinhaltet:
Justieren der Informationsstruktur der Anzeigeinformationen auf der Anzeigeeinheit als Reaktion auf eine Verschiebung der Sichtlinie (A) eines Benutzers auf der Anzeigeeinheit in Kombination mit einer Sprachanweisung.

13. Steuervorrichtung zur Anzeige von Informationen, die Folgendes umfasst:
ein Informationsstruktursteuermodul (802), das zum Justieren einer Informationsstruktur von Anzeigeinformationen auf einer Anzeigeeinheit als Reaktion auf eine Verschiebung der Sichtlinie (A) eines Benutzers auf der Anzeigeeinheit beim Fahren eines Fahrzeugs (102) konfiguriert ist,
**dadurch gekennzeichnet, dass**:
Informationen in einem Bereich auf der Anzeigeeinheit über eine Multi-Level-Schnittstelle angezeigt werden, die Multi-Level-Schnittstelle eine Upper-Level-Schnittstelle zum Anzeigen eines ersten Teils der Informationen als Vorgabe und eine Lower-Level-Schnittstelle zum Anzeigen eines zweiten Teils der Informationen umfasst; und
das genannte Justieren der Informationsstruktur von Anzeigeinformation auf der Anzeigeeinheit als Reaktion auf eine Verschiebung der Sichtlinie (A) eines Benutzers auf der Anzeigeeinheit (102) Folgendes beinhaltet:
Öffnen der Lower-Level-Schnittstelle der Multi-Level-Schnittstelle und Anzeigen des zweiten Teils der Information, wenn eine Verweilzeit der Sichtlinie (A) des Benutzers in dem Bereich eine voreingestellte Zeitspanne überschreitet.

14. Fahrzeug, das einen Speicher und ein oder mehrere in dem Speicher gespeicherte Programme umfasst, wobei das Fahrzeug zum Ausführen der ein oder mehreren Programme durch einen oder mehrere Prozessoren konfiguriert ist, um das Steuerverfahren zum Anzeigen von Informationen nach einem der Ansprüche 1 bis 12 durchzuführen.

15. Lesbares Speichermedium, das Befehle umfasst, wobei die Befehle in dem Speichermedium bei Ausführung durch einen Prozessor eines elektronischen Geräts bewirken, dass das elektronische Gerät das Steuerverfahren für die Informationsanzeige nach einem der Ansprüche 1 bis 12 durchführt.

## Revendications

1. Procédé de commande pour un affichage d'informations, comprenant :
un ajustement d'une structure d'informations d'informations d'affichage sur une unité d'affichage en réponse à un décalage d'une ligne visuelle (A) d'un utilisateur sur l'unité d'affichage pendant la conduite d'un véhicule (102),
**caractérisé en ce que** :
des informations sont affichées dans une zone sur l'unité d'affichage par l'intermédiaire d'une interface à multiples niveaux, l'interface à multiples niveaux comprend une interface de niveau supérieur pour un affichage d'une première partie des informations par défaut et une interface de niveau inférieur pour un affichage d'une seconde partie des informations ; et
ledit ajustement de la structure d'informations d'informations d'affichage sur l'unité d'affichage en réponse à un décalage d'une ligne visuelle (A) d'un utilisateur sur l'unité d'affichage (102), comprend :
une ouverture de l'interface de niveau inférieur de l'interface à multiples niveaux et un affichage de la seconde partie des informations lorsqu'un temps de rétention de la ligne visuelle (A) de l'utilisateur dans la zone dépasse une durée prédéfinie.

2. Procédé selon la revendication 1, dans lequel l'unité d'affichage comprend un tableau de bord, et une structure d'informations du tableau de bord comprend une région gauche, une région médiane et une région droite, et dans lequel
ledit ajustement de la structure d'informations d'informations d'affichage sur l'unité d'affichage en réponse à un décalage d'une ligne visuelle (A) d'un utilisateur sur l'unité d'affichage (102), comprend :
lorsque la ligne visuelle (A) de l'utilisateur se déplace vers la région médiane du tableau de bord, un agrandissement de la région médiane et des informations d'affichage dans la région médiane, un rétrécissement de la région gauche et des informations d'affichage dans la région gauche, et un rétrécissement de la région droite et des informations d'affichage dans la région droite ; ou
lorsque les informations d'affichage dans la région droite sont dissimulées, un affichage des informations d'affichage correspondantes dans la région droite lorsque la ligne visuelle (A) de l'utilisateur se déplace vers la région droite du tableau de bord.

3. Procédé selon la revendication 2, dans lequel ledit ajustement de la structure d'informations d'informations d'affichage sur l'unité d'affichage en réponse à un décalage d'une ligne visuelle (A) d'un utilisateur sur l'unité d'affichage (102), comprend en outre :
si des messages de notification sont affichés dans la région droite, un affichage des informations sources des messages de notification dans la région droite lorsque la ligne visuelle (A) de l'utilisateur se déplace vers la région droite du tableau de bord ; ou
une ouverture d'une interface de niveau inférieur d'une interface actuelle dans la région gauche et un affichage d'informations correspondantes lorsqu'un temps de rétention de la ligne visuelle (A) de l'utilisateur dans la région gauche dépasse une durée prédéfinie.

4. Procédé selon la revendication 3, dans lequel ledit ajustement de la structure d'informations d'informations d'affichage sur l'unité d'affichage en réponse à un décalage d'une ligne visuelle (A) d'un utilisateur sur l'unité d'affichage (102), comprend en outre :
un affichage de contenu du message de notification lorsqu'un temps de rétention de la ligne visuelle (A) de l'utilisateur dans une zone d'affichage pour les informations sources dépasse une durée prédéfinie.

5. Procédé selon la revendication 1, dans lequel :
l'unité d'affichage comprend un tableau de bord central, et une structure d'informations du tableau de bord central comprend une région droite pour un affichage d'informations de navigation et une région gauche pour un affichage d'autres catégories d'informations ; et
ledit ajustement de la structure d'informations d'informations d'affichage sur l'unité d'affichage en réponse à un décalage d'une ligne visuelle (A) d'un utilisateur sur l'unité d'affichage (102), comprend :
si, après un basculement des informations de navigation d'un affichage dans la région droite à un affichage dans la totalité du tableau et une dissimulation d'autres catégories d'informations, la ligne visuelle (A) de l'utilisateur se déplace vers la région gauche du tableau de bord central, un affichage des autres catégories d'informations correspondantes dans la région gauche,
dans lequel une interface sur laquelle les autres catégories d'informations sont situées est au-dessus d'une interface sur laquelle les informations de navigation sont situées.

6. Procédé selon la revendication 5, dans lequel ledit ajustement de la structure d'informations d'informations d'affichage sur l'unité d'affichage en réponse à un décalage d'une ligne visuelle (A) d'un utilisateur sur l'unité d'affichage (102), comprend en outre :
une nouvelle dissimulation des autres catégories d'informations lorsque la ligne visuelle (A) de l'utilisateur se déplace vers la région droite du tableau de bord central ou que la ligne visuelle (A) de l'utilisateur a quitté la région gauche du tableau de bord central pendant une durée prédéfinie après l'affichage des autres catégories d'informations dans la région gauche.

7. Procédé selon la revendication 1, dans lequel une pluralité d'unités d'affichage sont fournies, et ledit ajustement de la structure d'informations d'informations d'affichage sur l'unité d'affichage en réponse à un décalage d'une ligne visuelle (A) d'un utilisateur sur l'unité d'affichage (102), comprend :
un basculement d'un message de notification d'une première unité d'affichage à une seconde unité d'affichage pour un affichage si le message de notification est affiché dans la première unité d'affichage et la ligne visuelle (A) de l'utilisateur bascule vers la seconde unité d'affichage dans le processus de réception du message de notification ou pendant une durée prédéfinie après la réception du message de notification.

8. Procédé selon la revendication 1, comprenant en outre :
lorsque la ligne visuelle (A) de l'utilisateur se déplace vers l'unité d'affichage, une détermination d'une luminosité cible sur la base de la ligne visuelle (A) de l'utilisateur, d'une luminosité intérieure du véhicule et d'une heure actuelle ; et
un ajustement de la luminosité de l'unité d'affichage sur laquelle la ligne visuelle (A) de l'utilisateur tombe d'une luminosité par défaut à la luminosité cible.

9. Procédé selon la revendication 1, comprenant en outre :
une détection d'une position relative de la tête (B) de l'utilisateur par rapport à l'unité d'affichage ; et
un ajustement des informations d'affichage sur l'unité d'affichage à afficher à l'utilisateur sur la base de la position relative (B).

10. Procédé selon la revendication 9, dans lequel :
l'unité d'affichage comprend un tableau de bord, et une structure d'informations du tableau de bord comprend une région gauche, une région médiane et une région droite, et
ledit ajustement des informations d'affichage sur l'unité d'affichage à afficher à l'utilisateur sur la base de la position relative (B) comprend un ajustement des informations d'affichage dans la région gauche et la région droite du tableau de bord à afficher à l'utilisateur sur la base de la position relative (B) ;
ou
l'unité d'affichage comprend un tableau de bord central, et une structure d'informations du tableau de bord central comprend une région gauche et une région droite, et
ledit ajustement des informations d'affichage sur l'unité d'affichage à afficher à l'utilisateur sur la base de la position relative (B) comprend un ajustement des informations d'affichage dans la région gauche du tableau de bord central à afficher à l'utilisateur sur la base de la position relative (B).

11. Procédé selon la revendication 1, dans lequel l'unité d'affichage comprend un tableau de bord central, et ledit ajustement de la structure d'informations d'informations d'affichage sur l'unité d'affichage en réponse à un décalage d'une ligne visuelle (A) d'un utilisateur sur l'unité d'affichage (102), comprend :
lorsqu'un conducteur et un passager de siège avant sont présents dans le véhicule, un ajustement d'une structure d'informations des informations d'affichage dans le tableau de bord central en réponse à un basculement de la ligne visuelle (A) du passager vers le tableau de bord central si la ligne visuelle (A) du conducteur n'a pas été détectée comme se déplaçant vers le tableau de bord central.

12. Procédé selon la revendication 1, dans lequel ledit ajustement de la structure d'informations d'informations d'affichage sur l'unité d'affichage en réponse à un décalage d'une ligne visuelle (A) d'un utilisateur sur l'unité d'affichage (102), comprend :
un ajustement de la structure d'informations des informations d'affichage sur l'unité d'affichage en réponse à un décalage d'une ligne visuelle (A) d'un utilisateur sur l'unité d'affichage combiné à une instruction vocale.

13. Appareil de commande pour un affichage d'informations, comprenant :
un module de commande de structure d'informations (802), configuré pour ajuster une structure d'informations d'informations d'affichage sur une unité d'affichage en réponse à un décalage d'une ligne visuelle (A) d'un utilisateur sur l'unité d'affichage pendant la conduite d'un véhicule (102),
**caractérisé en ce que** :
des informations sont affichées dans une zone sur l'unité d'affichage par l'intermédiaire d'une interface à multiples niveaux, l'interface à multiples niveaux comprend une interface de niveau supérieur pour un affichage d'une première partie des informations par défaut et une interface de niveau inférieur pour un affichage d'une seconde partie des informations ; et
ledit ajustement de la structure d'informations d'informations d'affichage sur l'unité d'affichage en réponse à un décalage d'une ligne visuelle (A) d'un utilisateur sur l'unité d'affichage (102), comprend :
une ouverture de l'interface de niveau inférieur de l'interface à multiples niveaux et un affichage de la seconde partie des informations lorsqu'un temps de rétention de la ligne visuelle (A) de l'utilisateur dans la zone dépasse une durée prédéfinie.

14. Véhicule, comprenant une mémoire et un ou plusieurs programmes stockés dans la mémoire, le véhicule configuré pour exécuter les un ou plusieurs programmes par un ou plusieurs processeurs pour réaliser le procédé de commande pour un affichage d'informations selon l'une quelconque des revendications 1 à 12.

15. Support de stockage lisible comprenant des instructions, dans lequel lorsque les instructions dans le support de stockage sont exécutables par un processeur d'un dispositif électronique, le dispositif électronique est amené à réaliser le procédé de commande pour un affichage d'informations selon l'une quelconque des revendications 1 à 12.
